# EUROPÄISCHE PATENTSCHRIFT

(11) **EP 2 308 201 B1**
(45) Veröffentlichungstag und Bekanntmachung des Hinweises auf die Patenterteilung: **19.11.2014**
(21) Anmeldenummer: 09765491.7
(22) Anmeldetag: 19.05.2009
(51) Int. Cl.: H04L 12/24, H04L 29/08

(54) **SYSTEM ZUR KOMMUNIKATION VON BETRIEBSDATEN ZWISCHEN EINER ZENTRALE UND MINDESTENS EINEM UNBEMANNTEN FUNKSENDER**
SYSTEM FOR COMMUNICATING OPERATING DATA BETWEEN A CENTRAL OFFICE AND AT LEAST ONE UNMANNED RADIO TRANSMITTER
SYSTÈME DE COMMUNICATION DE DONNÉES D EXPLOITATION ENTRE UNE CENTRALE ET AU MOINS UN ÉMETTEUR RADIO NON OCCUPÉ

(30) Priorität: 19.06.2008 DE 102008029160
(43) Veröffentlichungstag der Anmeldung: 13.04.2011
(73) Patentinhaber: Rohde & Schwarz GmbH & Co. KG, 81671 München (DE)
(72) Erfinder: GÖRIG, Torsten, 12527 Berlin (DE)
(74) Vertreter: Körfer, Thomas
(86) Internationale Anmeldenummer: PCT/EP2009/003588
(87) Internationale Veröffentlichungsnummer: WO 2009/152911

(56) Entgegenhaltungen:
- WO-A1-02/19629
- WO-A1-98/04067
- US-A- 5 961 594
- US-A1- 2003 200 301

## Beschreibung

Die Erfindung betrifft ein System zur Kommunikation von Betriebsdaten zwischen einer Zentrale und mindestens einem unbemannten Funksender.

Funksender werden entweder bemannt oder unbemannt betrieben. Für den unbemannten Betrieb von Funksendern sind diesen jeweils eine Fernsteuereinrichtung zur Überwachung, Fernbedienung und Fernkonfiguration von Betriebsdaten des Funksenders zugeordnet, die mit einer bemannten Warte an einem zentralen Ort - so genannte Zentrale - über ein öffentliches oder privates Netzwerk - beispielsweise ein Local-Area-Network (LAN) oder ein Wide-Area-Network (WAN) - verbunden sind. Bei den Betriebsdaten handelt es sich um Betriebsparameter, die kontinuierlich überwacht und bei Bedarf im Störfall fernkonfiguriert werden oder um Betriebsfunktionen - beispielsweise das Ein- und Ausschalten von Aggregaten des Funksenders -, die bei Bedarf fernbedient werden. Auf diese Weise kann mit einem derartigen System eine Vielzahl von Funksendern zentral überwacht, gesteuert und evtl. geregelt werden.

Sowohl die Zentrale als auch die Fernsteuereinrichtungen der einzelnen Funksender weisen zur Datenkommunikation jeweils mehrere Datenschnittstellen auf, die jeweils für unterschiedliche Kommunikationsprotokolle - beispielsweise HyperText-Transfer-Protocol (HTTP) oder Simple-Network-Management-Protocol (SNMP) - ausgelegt sind.

Der Vorteil einer HTTP-Verbindung liegt in der Realisierung einer plattformunabhängigen Bedienoberfläche oder -philosophie. Über einen im Funksender integrierten Webserver können beispielsweise mehrere Konfigurationsparameter in verschiedenen Parametersätzen abgespeichert werden, erfasste Bediendaten nachbearbeitet werden, mehrere Bediendaten zu höher aggregierten Bediendaten zusammengefasst werden und über eine standardisierte HTTP-Schnittstelle plattformunabhängig einem in der Zentrale befindlichen Web-Client mit integriertem Web-Browser zur Auswertung und graphischen Darstellung zugeführt werden.

Die SNMP-Verbindung bietet dagegen systembedingt den Vorteil, auf bestimmte Ereignisse in einem der Funksender - beispielsweise auf eine von der Fernsteuereinrichtung eines Funksenders identifizierte Störung - in kürzest möglicher Zeit mittels Auswertung eines bei Störung erzeugten SNMP-Traps zu reagieren.

Ein reiner Protokoll-Umsetzer zwischen einer SNMP-Verbindung und einer HTTP-Verbindung bietet keine in einem Web-Server- und Web-Client-Umfeld leicht zu realisierende Bedienphilosophie und -oberfläche und ermöglicht auch kein Durchschalten von SNMP-Traps an den Web-Browser eines Web-Clients und scheidet deshalb aus.

Graphische Bedienoberflächen mit SNMP-Schnittstelle bieten keinelplattformunabhängige Bedienphilosophie und scheiden deshalb ebenfalls aus.

Reine SNMP-Managementstationen stellen keine plattformunabhängigen Bedienoberflächen und -philosophien dar und scheiden schließlich auch aus.

Somit ist das gleichzeitige Vorhalten einer HTTP- und einer SNMP-Verbindung beim Überwachen, Fernbedienen und Fernkonfigurieren mehrerer Funksender durch eine Zentrale, wie sie in der WO 02/19629 Al offenbart ist, unabdingbar.

Aus der WO 02/19629 A1 ist ein System zum Betrieb, insbesondere zur Fernbedienung und Fernüberwachung von unbemannten Funksendern bekannt. Hierbei erfolgt die Datenkommunikation zur bedarfsorientierten Abfrage der Betriebsdaten des jeweiligen Funksenders über einen in einem Web-Client der Zentrale implementierten Web-Browser und einen im Funksender lokalisierten zugehörigen Web-Server mittels HyperText-Transfer-Protocol (HTTP). Die kontinuierliche, unaufgeforderte Übertragung von Betriebsdaten des jeweiligen Funksenders erfolgt gleichzeitig über einen Rückmeldekanal, der entweder nach dem Simple-Network-Management-Protocol (SNMP) zwischen einem SNMP-Agenten im jeweiligen Funksender und einem SNMP-Manager in der Zentrale oder nach einer zusätzlichen nach dem HTTP-Protokoll arbeitenden Client-Server-Verbindung realisiert ist. Bei Detektion einer Störung oder Fehlfunktion des jeweiligen Funksenders kann die Störung oder Fehlfunktion sofort in der Zentrale angezeigt und über eine der beiden Fernverbindungen - Client-/Server-Verbindung auf HTTP-Protokoll-Basis oder SNMP-Protokoll-Verbindung zwischen SNMP-Agent und SNMP-Manager - behoben werden.

Das offenbarte System zum Betrieb, insbesondere zur Fernbedienung und Fernüberwachung von unbemannten Funksendern weist den Nachteil auf, dass die auf der Fernsteuereinrichtung des jeweiligen Funksenders implementierte Betriebssoftware zwei unabhängig voneinander arbeitende Protokoll-Schnittstellen - HTTP-und SNMP-Schnittstelle - zu bedienen hat. Im Hinblick auf Datenkonsistenz zwischen beiden Protokoll-Schnittstellen sind bei einer Weiterentwicklung der Betriebssoftware zwei Protokoll-Schnittstellen auf Seiten der Funksender und gleichzeitig der Zentrale anzupassen bzw. zu pflegen, was mit einem hohen Entwicklungs- und Testaufwand verbunden ist.

Die WO 98/04067 Al bietet hierzu eine Lösung an, bei der als Datenverbindung eine Serienschaltung aus einer HTTP-Verbindung und einer SNMP-Verbindung verwendet wird und somit auf der Seite der Zentrale und jedes Funksenders jeweils nur noch eine einzige Protokoll-Schnittstelle zu pflegen ist.

Die WO 98/04067 Al offenbart jedoch nicht, wie auf Störungen in den Fernsteuereinrichtungen in möglichst kurzer Zeit reagiert werden kann, da in der WO 98/04067 Al auf die SNMP-Verbindung eine HTTP-Verbindung folgt, in der SNMP-Traps vergleichsweise langsam im Polling-Verfahren abgefragt und damit identifiziert werden.

Aufgabe der Erfindung ist es deshalb, ein System zur Überwachung, Fernbedienung und Fernkonfiguration von mehreren Funksendern durch eine Zentrale über ein öffentliches oder privates Netzwerk derart weiterzuentwickeln, dass auf Störungen in den Fernsteuereinrichtungen der Funksender in möglichst kurzer Zeit reagiert werden kann.

Die Aufgabe wird durch ein System zur Kommunikation von Betriebsdaten zwischen einer Zentrale und mindestens einem unbemannten Funksender mit den Merkmalen des Patentanspruchs 1 gelöst. Vorteilhafte technische Erweiterungen der Erfindung sind in den abhängigen Patentansprüchen angegeben.

Die in jedem Funksender jeweils enthaltenen Fernsteuereinrichtungen weisen jeweils nur eine einzige Datenkommunikationsschnittstelle, nämlich eine Simple-Network-Management-Protocol-Schnittstelle, auf. Des weiteren besitzen eine oder mehrere Funksender, die mit der Zentrale über eine HTTP-Verbindung kommunizieren, jeweils einen Webserver mit einer HyperText-Transfer-Protocol-Schnittstelle zur Datenkommunikation mit einem auf einem Web-Client der Zentrale implementierten Web-Browser, und mit einer Simple-Network-Management-Protocol-Schnittstelle zur Datenkommunikation mit der SNMP-Schnittstelle der Fernsteuereinrichtung desselben Funksenders und mit weiteren SNMP-Schnittstellen zur Datenkommunikation mit SNMP-Schnittstellen von Fernsteuereinrichtungen auf Funksendern, die über keinen Web-Server und damit keine eigenständige HTTP-Verbindung zur Zentrale verfügen.

Erfindungsgemäß ist für den Aufbau und den laufenden Betrieb der SNMP-Verbindung zwischen Fernsteuereinrichtung und Web-Server ist in der Fernsteuereinrichtung ein SNMP-Agent - eine Kommunikations-Software zur Erfassung und zur Einstellung von Betriebsdaten der Fernsteuereinrichtung sowie zur Auslösung von Aktionen (beispielsweise eines Traps bei Eintreten eines Ereignisses in der Fernsteuereinrichtung) - und im Web-Server ein korrespondierender SNMP-Manager - eine Kommunikations-Software zum Anfordern und zum Ändern von Betriebsdaten der Fernsteuereinrichtung - eingerichtet.

Im Web-Server erfolgt eine Vorverarbeitung von einzustellenden Betriebsdaten - beispielsweise Abspeichern von mehreren funksenderspezifischen Konfigurationsparametern in verschiedenen funksenderspezifischen Parametersätzen - oder eine Nachverarbeitung von erfassten Betriebsdaten - beispielsweise Zusammenfassung von mehreren erfassten Bediendaten zu höher aggregierten Bediendaten - sowie eine Bereitstellung einer plattformunabhängigen HTTP-Schnittstelle zur Zentrale.

Da über die HTTP-Verbindung einzig im Rahmen eines Polling-Verfahrens kontinuierlich Betriebsparameter der Funksender abgefragt - entspricht Überwachen - und daraufhin im Störfall Betriebsparameter geändert - entspricht Fernkonfigurieren - und Betriebsfunktionen angesteuert - entspricht Fernbedienen - werden können, aber keine Ereignisse in der Fernsteuereinrichtung von einem in einem Funksender installierten Web-Server identifiziert und an den im Web-Client der Zentrale implementierten Web-Browser weitergeleitet werden können, ist dem Web-Browser der Zentrale eine Funktionseinheit vorgelagert, die über eine SNMP-Verbindung einen durch ein derartiges Ereignis ausgelösten SNMP-Trap in der Fernsteuerung eines Funksenders empfängt, verarbeitet und den Web-Browser zur Einleitung geeigneter Überwachungs-, Fernkonfigurier- und/oder -Fernbedienmaßnahmen informiert.

Vom Wartungs- und Inspektionspersonal kann mittels eines mobilen Datenerfassungsgeräts, auf dem ein Web-Client mit einem Web-Browser realisiert ist, eine HTTP-Verbindung zum Web-Server der Funksender aufgebaut werden. Zum Datenaustausch des mobilen Datenerfassungsgeräts mit der Zentrale besteht eine Datenkommunikationsverbindung, bevorzugt eine HTTP-Verbindung. Auf diese Weise können Betriebsdaten vom mobilen Datenerfassungsgerät zur Zentrale zur weiteren Auswertung, graphischen Darstellung und Archivierung weitergeleitet werden.

Das LAN bzw. WAN des öffentlichen oder privaten Netzwerkes zwischen Zentrale und den einzelnen Funksendern kann entweder ein Festnetz oder ein nach dem WAP-Protokoll arbeitendes Funknetz sein.

Im Folgenden werden die beiden Ausführungsformen des erfindungsgemäßen Systems zur Kommunikation von Betriebsdaten zwischen einer Zentrale und mindestens einem unbemannten Funksender anhand der Zeichnung im Detail erläutert. Die Figuren der Zeichnung zeigen:
- Fig. 1: ein Blockdiagramm einer ersten Ausführungsform des erfindungsgemäßen Systems zur Kommunikation von Betriebsdaten zwischen einer Zentrale und mindestens einem unbemannten Funksender und
- Fig. 2: ein Blockdiagramm einer zweiten Ausführungsform des erfindungsgemäßen Systems zur Kommunikation von Betriebsdaten zwischen einer Zentrale und mindestens einem unbemannten Funksender.

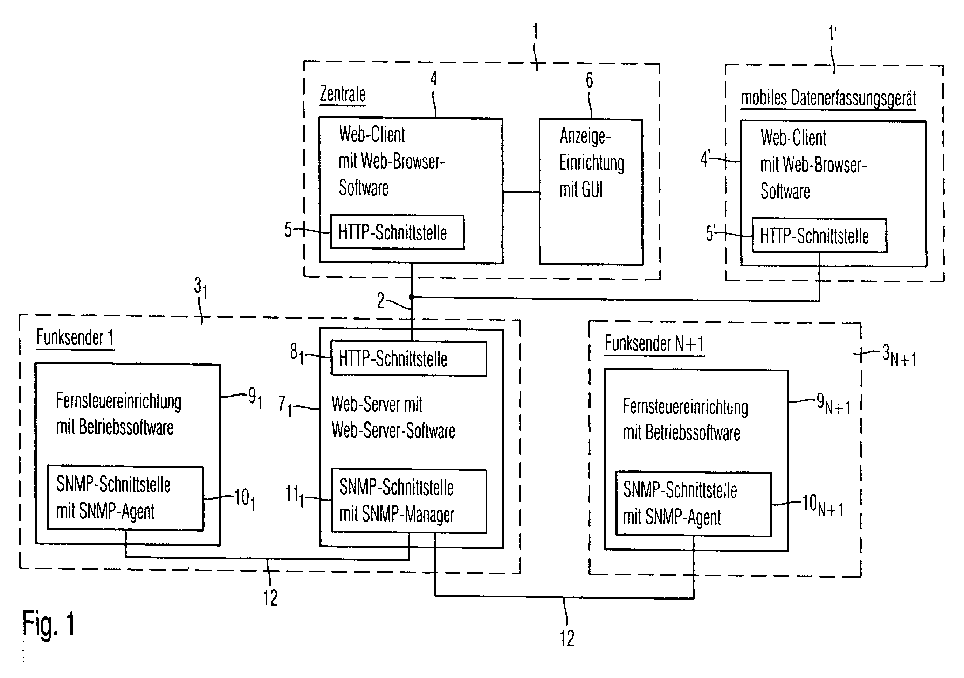

Die in Fig. 1 dargestellte erste Ausführungsform des erfindungsgemäßen Systems zur Kommunikation von Betriebsdaten zwischen einer Zentrale und mindestens einem unbemannten Funksender weist eine an einer zentralen Stelle positionierte Warte - im Folgenden kurz Zentrale 1 genannt - auf. Die Zentrale 1 ist über ein öffentliches oder privates Netzwerk 2 in der Ausprägung eines Local-Area-Network (LAN) oder Wide-Area-Network (WAN) mit einem oder mehreren Funksendern 3₁, 3₂, ..., 3_{N} verbunden. Der Anschaulichkeit halber ist die Zentrale 1 in Fig. 1 nur mit einem Funksender 3₁ über ein öffentliches oder privates Netzwerk 2 verbunden.

Die Verbindung der Zentrale mit den Funksendern 3₁, 3₂, ..., 3_{N} basiert auf einer standardisierten, plattformunabhängigen Datenkommunikationsverbindung, bevorzugt auf einer HyperText-Transfer-Protocol-Verbindung (HTTP-Verbindung) über das als öffentliches Netz weltweit bekannte Internet. Zur Abwicklung der Datenkommunikation über das Internet weist die Zentrale einen Web-Client 4 - einen Rechner zur Abwicklung einer Datenkommunikation im Internet über eine HTTP-Verbindung - mit einer integrierten HTTP-Schnittstelle 5 auf. Auf dem Web-Client 4 ist ein Web-Browser - eine Software zur Durchführung von Abfragen und zur Veranlassung von bestimmten Aktionen im Internet nach dem HTTP-Protokoll - implementiert. Die Auswertung der von den einzelnen Funksendern 3₁, 3₂, ..., 3_{N} erhaltenen Betriebsdaten kann entweder in einem vom Web-Client separierten Rechner - in Fig. 1 nicht dargestellt - oder im Web-Client 4 integriert (embedded) durchgeführt werden. Die Darstellung der Betriebsdaten sowie der Auswertungen aus den Betriebsdaten erfolgt auf einer AnzeigeEinrichtung 6 mit integrierten Graphical-User-Interface (GUI).

Im jeweiligen Funksender 3₁, 3₂,..., 3_{N} ist ein mit dem Web-Client 4 der Zentrale 1 über das Internet 2 kommunizierender Web-Server 7₁, 7₂,..., 7_{N} vorgesehen, der jeweils über eine HTTP-Schnittstelle 8₁, 8₂,..., 8_{N} zum Internet 2 verfügt. Der jeweilige Funksender 3₁, 3₂, ..., 3_{N} enthält jeweils eine Fernsteuereinrichtung 9₁, 9₂,..., 9_{N}, deren Betriebssoftware die einzelnen Betriebsparameter des jeweiligen Funksenders 3₁,3₂,...,3_{N} erfasst und auf Über- oder Unterschreitung gewisser festgelegter Grenzwerte überwacht. Die Betriebssoftware der jeweiligen Fernsteuereinrichtung 9₁, 9₂, ..., 9_{N} ist auch in der Lage, die Werte von Betriebsparametern der jeweiligen Funksender 3₁, 3₂,..., 3_{N} zu ändern bzw. neu zu konfigurieren. Schließlich ist es mit der Betriebssoftware der jeweiligen Fernsteuereinrichtung 9₁, 9₂, ..., 9_{N} möglich, bestimmte Betriebsfunktionen im jeweiligen Funksender 3₁, 3₂,..., 3_{N} - beispielsweise das Ein- und Ausschalten bestimmter Aggregate des jeweiligen Funksenders 3₁, ₃2,..., 3_{N} - durchzuführen.

Die im jeweiligen Funksender 3₁, 3₂,..., 3_{N} installierte Fernsteuereinrichtung 9₁, 9₂,..., 9_{N} ist folglich die mit der Zentrale in Verbindung stehende, vor Ort im jeweiligen Funksender 3₁, 3₂,..., 3_{N} sich befindende Funktionseinheit, die die eigentliche Überwachung, Fernbedienung und Fernkonfiguration des jeweiligen Funksenders 3₁, 3₂,..., 3_{N} durchführt. Zur datentechnischen Anbindung der Fernsteuereinrichtung 9₁, 9₂, ..., 9_{N} des jeweiligen Funksenders 3₁, 3₂, ..., ₃N an die Zentrale 1 über den Web-Server 7₁, 7₂, ..., 7_{N} des jeweiligen Funksenders 3₁, 3₂,..., 3_{N} ist zwischen der jeweiligen Fernsteuereinrichtung 9₁,9₂, ..., 9_{N} und dem jeweiligen Web-Server 7₁, 7₂, ..., 7_{N} eine Simple-Network-Management-Protocol-Verbindung 12 (SNMP-Verbindung) vorgesehen.

Hierzu weist die jeweilige Fernsteuereinrichtung 9₁, 9₂,..., 9_{N} jeweils eine SNMP-Schnittstelle 10₁, 10₂,..., 10_{N} und der jeweilige Web-Server 7₁, 7₂,..., 7_{N} jeweils eine SNMP-Schnittstelle 11₁, 11₂, ..., 11_{N} auf. Ein mit der Betriebssoftware der jeweiligen Fernsteuereinrichtung 9₁, 9₂, ..., 9_{N} zusammenarbeitender SNMP-Agent - eine Software zur Abfrage von Betriebsparametern, zum Ändern bzw. zum Neukonfigurieren von Betriebsparametern und zum Aktivieren von Betriebsfunktionen, zum Antworten der angeforderten Betriebsdaten und zum Konvertieren der erfassten Betriebsdaten in SNMP-Protokoll-kompatible Übertragungsdaten - steht über die SNMP-Schnittstelle 10₁, 10₂, ..., 10_{N} der jeweiligen Fernsteuereinrichtung 9₁, 9₂, ..., 9_{N} und die SNMP-Schnittstelle 11₁, 11₂, ..., 11_{N} des jeweiligen Web-Servers 7₁, 7₂,..., 7_{N} mit einem korrespondierenden SNMP-Manager - eine Software zum Anfordern von Betriebsdaten und zum Konvertieren der angeforderten Betriebsdaten von SNMP-Protokoll-kompatiblen in HTTP-Protokoll-kompatible Übertragungsdaten - im jeweiligen Web-Server 7₁, 7₂, ..., 7_{N} in Verbindung. Die einzelnen Betriebsdaten, die vom SNMP-Manager abgefragt bzw. verändert werden können, sind als "Managed Objects" in einer Management-Information-Base-Tabelle (MIB-Tabelle) hinsichtlich ihres Namens, ihres Datentyps, ihrer Zugriffsberechtigung, ihres Status, ihres Object-Identifiers usw. beschrieben und definiert.

Die auf dem jeweiligen Web-Server 7₁, 7₂,..., 7_{N} implementierte Web-Server-Software führt neben kommunikationstechnischen Funktionen auch diverse Vorverarbeitungsfunktionen an den von der Zentrale 1 über die HTTP-Verbindung 2 empfangenen Betriebsparametern - beispielsweise Bündelung von mehreren funksenderspezifischen Konfigurationsparametern zu funksenderspezifischen Parametersätzen und Abspeichern mehrerer verschiedener funksenderspezifischen Parametersätzen - und diverse Nachverarbeitungsfunktionen an den von der jeweiligen Fernsteuereinrichtung 9₁, 9₂,..., 9_{N} über die SNMP-Verbindung 12 jeweils erhaltenen Betriebsdaten - beispielsweise Zusammenfassung von mehreren erfassten Betriebsdaten zu höher aggregierten Betriebsdaten und Zwischenspeichern von höher aggregierten Betriebsdaten - durch. Die erfassten Betriebsdaten bzw. die nachverarbeiteten Betriebsdaten werden in einem in Fig. 1 nicht dargestellten Speicher des jeweiligen Web-Servers 7₁, 7₂,..., 7_{N} als Web-Seiten (web pages) im XML-Standard abgespeichert und können somit vom Web-Browser im Web-Client 4 der Zentrale 1 abgerufen bzw. abgefragt werden.

Das in Fig. 1 dargestellte erfindungsgemäße System zur Kommunikation von Betriebsdaten zwischen einer Zentrale und mindestens einem unbemannten Funksender ermöglicht die Überwachung, Fernbedienung und Fernkonfiguration von zusätzlichen Funksendern 3_{N+1}, 3_{N+2},..., 3_{Z}, die jeweils über keine HTTP-Schnittstelle und keinen Web-Server verfügen und somit mit der Zentrale 1 nicht direkt eine Datenkommunikation durchführen können. Die zugehörigen Fernsteuereinrichtungen 9_{N+1}, 9_{N+2},..., 9_{Z} verfügen ebenfalls über jeweils eine SNMP-Schnittstelle 10_{N+1},10_{N+2},..., 10_{Z} und über jeweils einen SNMP-Agenten, die jeweils über eine SNMP-Verbindung 12 und über eine in einem Funksender 3₁, 3₂, ..., 3_{N} mit Web-Server 7₁, 7₂, ..._{,} 7_{N} befindliche SNMP-Schnittstelle 11₁, 11₂,..., 11_{N} mit einem auf diesem Webserver 7₁, 7₂,...., 7_{N} implementierten SNMP-Manager eine Datenkommunikation im SNMP-Protokoll durchführen.

Die Überwachung, Fernbedienung und Fernkonfiguration eines Funksenders 3₁, 3₂,..., 3_{N} bzw. 3_{N+1}, 3_{N+2}...., 3_{Z} kann anstelle der fest lokalisierten Zentrale 1 alternativ oder in Ergänzung dazu durch ein mobiles Datenerfassungsgerät 1' von im Vorort-Einsatz befindlichen Wartungs- bzw. Inspektionspersonal erfolgen. Hierzu enthält das mobile Datenerfassungsgerät 1' in Analogie zur Zentrale 1 einen Web-Client 4' mit implementierter Web-Browser-Software und integrierter HTTP-Schnittstelle 5' und kann somit die identischen Funktionen der Überwachung, Fernbedienung und Fernkonfiguration eines Funksenders 3₁, 3₂,..., 3_{N} bzw. 3_{N+1}, 3_{N+2}, ..., 3_{Z} wie die Zentrale 1 übernehmen, soweit die auf dem mobilen Datenerfassungsgerät 1' vorhandenen Rechner- und Speicherkapazitäten dies zulassen. Optional kann das mobile Datenerfassungsgerät 1' eine in Fig. 1 nicht dargestellte Anzeigeeinrichtung mit integrierter GUI zur Darstellung der erfassten Betriebsdaten enthalten.

Zum Austausch von erfassten Betriebsdaten - beispielsweise zur Langzeitarchivierung von erfassten Betriebsdaten in der Zentrale 1 - kann die HTTP-Verbindung 2 zwischen Zentrale 1 und mobilen Datenerfassungsgerät 1'genutzt werden.

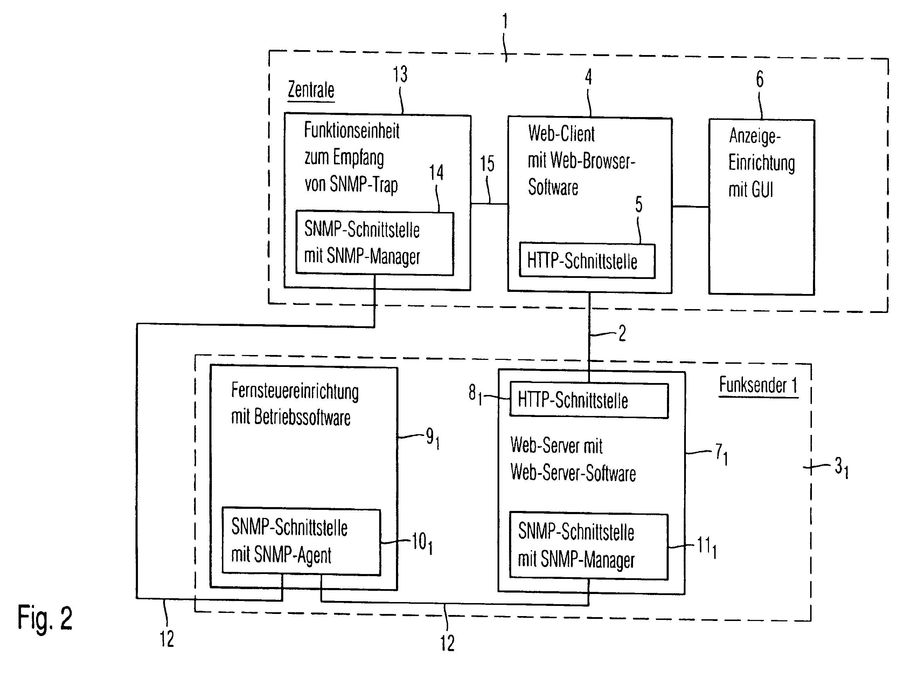

In der in Fig. 2 dargestellten zweiten Ausführungsform des erfindungsgemäßen Systems zur Kommunikation von Betriebsdaten zwischen einer Zentrale und mindestens einem unbemannten Funksender kann die Zentrale 1 in Abhängigkeit eines in einem Funksender 3₁, 3₂,..., 3_{N} bzw. 3_{N+1}, 3_{N+2,}..., 3_{Z} von der jeweiligen Fernsteuereinrichtung 9₁, 9₂,..., 9_{N} bzw. 9_{N+1,} 9_{N+2},..., 9_{Z} identifizierten Ereignisses über die HTTP-Verbindung 2 vergleichsweise zeitnah reagieren.

Ein derartiges Ereignis wird von einem in der Fernsteuereinrichtung 9₁, 9₂,..., 9_{N} bzw. 9_{N+1},9_{N+2,}..., 9_{Z} des jeweiligen Funksenders 3₁, 3₂,..., 3_{N} bzw. 3_{N+1}, 3_{N+2}...., 3_{Z} arbeitenden SNMP-Agenten identifiziert und mit dem Versenden eines zugehörigen SNMP-Traps beantwortet. Da ein derartiger SNMP-Trap über eine HTTP-Verbindung nicht transferierbar ist, ist ein derartiges Ereignis von der Zentrale 1 gemäß der ersten Ausführungsform des erfindungsgemäßen Systems zur Kommunikation von Betriebsdaten zwischen einer Zentrale und mindestens einem unbemannten Funksender gemäß Fig. 1 nicht zeitnah zu detektieren, sondern erst im Rahmen des bei einer HTTP-Verbindung üblichen Polling-Verfahrens in der Größenordnung der Polling-Frequenz von der Zentrale 1 empfangbar. Die Reaktion der Zentrale 1 auf ein derartiges Ereignis kann u.U. erst verspätet im jeweiligen Funksender 3₁, 3₂, ..., 3_{N} bzw. 3_{N+1}, 3_{N+2},..., 3_{Z} eintreten.

Zum Empfang eines derart versendeten SNMP-Traps ist in der Zentrale eine Funktionseinheit zum Empfang eines SNMP-Traps 13 über eine zugehörige SNMP-Schnittstelle 14 und einen in der Funktionseinheit zum Empfang eines SNMP-Traps 13 implementierten SNMP-Managers vorgesehen. Der SNMP-Manager wertet den empfangenen SNMP-Trap aus und leitet die Auswertung des SNMP-Traps über eine Datenverbindung 15 an den im Web-Client 4 implementierten Web-Browser zur Ausführung einer geeigneten Reaktion weiter.

Die Erfindung ist nicht auf die beiden Ausführungsformen des erfindungsgemäßen Systems zur Kommunikation von Betriebsdaten zwischen einer Zentrale und mindestens einem unbemannten Funksender beschränkt. Von der Erfindung sind neben der HTTP-Verbindung über das Internet auch andere zukünftig einer Standardisierung zugeführte, plattformunabhängige Übertragungsverbindungen mit abgedeckt.

## Patentansprüche

1. System zur Kommunikation von Betriebsdaten zwischen einer Zentrale (1) und mindestens einem unbemannten Funksender (3₁, 3₂,..., 3_{N}, 3_{N+1}, 3_{N+2},..., 3_{Z}) über ein öffentliches oder privates Netzwerk (2) mit einem in der Zentrale (1) befindlichen Web-Client (4) mit implementierten Web-Browser und zumindest einem mit dem Web-Client (4) nach dem Hypertext-Transfer-Protokoll kommunizierenden, in einem oder mehreren Funksendern (3₁, 3₂, ..., 3_{N}) jeweils befindlichen Web-Server (7₁, 7₂,...,7_{N}) und zumindest einer in jedem Funksender (3₁, 3₂,..., 3_{N}, 3_{N+1}, 3_{N+2} ,.., 3_{Z}) jeweils befindlichen Fernsteuereinrichtung (9₁, 9₂ ,..., 9_{N}, 9_{N+1}, 9_{N+2,} ..., 9_{Z}) zur Überwachung, Fernsteuerung und/oder Fernkonfiguration von Betriebsdaten des jeweiligen Funksenders (3₁, 3₂,..., 3_{N}, 3_{N+1}, 3_{N+2},..., 3_{Z}),
**dadurch gekennzeichnet,**
**dass** die Kommunikation zwischen den in einem oder mehreren Funksendern (3₁, 3₂,..., 3_{N}, 3_{N+1}, 3_{N+2},..., 3_{Z}) jeweils befindlichen Web-Servern (7₁,7₂,...,7_{N}) und der in jedem Funksender (3₁, 3₂,..., 3_{N}, 3_{N+1}, 3_{N+2} ,..., 3_{Z}) jeweils befindlichen Fernsteuereinrichtung (9₁, 9₂ ,..., 9_{N}, 9_{N+1}, 9_{N+2} ,..., 9_{Z}) nach dem Simple-Network-Management-Protokoll erfolgt und
**dass** in der Zentrale (1) eine Funktions-Einheit (13) zum Empfang eines Simple-Network-Management-Protokoll-Traps, der von einem in der Fernsteuereinrichtung (9₁, 9₂ ,..., 9_{N}, 9_{N+1}, 9_{N+2} ,..., 9_{Z}) eines Funksenders (3₁, 3₂ ,..., 3_{N}, 3_{N+1}, 3_{N+2} ,..., 3_{Z}) befindlichen Simple-Network-Management-Protokoll-Agenten erzeugt wird, und zur Weiterleitung einer Auswertung des Simple-Network-Management-Protokoll-Traps an den Web-Browser zur Einleitung geeigneter Überwachungs-, Fernkonfigurier- und/oder Fernbedienmaßnahmen vorgesehen ist.

2. System zur Kommunikation von Betriebsdaten zwischen einer Zentrale und mindestens einem unbemannten Funksender nach Anspruch 1,
**dadurch gekennzeichnet,**
**dass** der in der Zentrale (1) befindliche Web-Client (4) eine Hypertext-Transfer-Protokoll-Schnittstelle (5), der im jeweiligen Funksender (3₁,3₂,...,3_{N}) befindliche Web-Server (7₁, 7₂,..., 7_{N}) eine HyperText-Transfer-Protokoll-Schnittstelle (8₁, 8₂, ..., 8_{N}) und mindestens eine Simple-Network-Management-Protokoll-Schnittstelle (11₁, 11₂, ..., 11_{N}) und die in jedem Funksender (3₁, 3₂,..., 3_{N}, 3_{N+1}, 3_{N+2},..., 3_{Z}) jeweils befindliche Fernsteuereinrichtung (9₁, 9₂,..., 9_{N,} 9_{N+1}, 9_{N+2} ,..., 9_{Z}) eine Simple-Network-Management-Protokoll-Schnittstelle (10₁, 10₂,..., 10_{N}, 10_{N+1}, 10_{N+2},..., 10_{Z}) aufweisen.

3. System zur Kommunikation von Betriebsdaten zwischen einer Zentrale und mindestens einem unbemannten Funksender nach Anspruch 1 oder 2,
**dadurch gekennzeichnet,**
**dass** die in jedem Funksender (3₁,3₂ ,..., 3_{N},3_{N+1},3_{N+2} ,..., 3_{Z}) jeweils befindliche Fernsteuereinrichtung (9₁, 9₂, ..., 9_{N}, 9_{N+1}, 9_{N+2} ,..., 9_{Z}) einen Simple-Network-Management-Protokoll-Agenten und die auf den jeweiligen Funksendern (3₁, 3₂,..., 3_{N}) jeweils befindlichen Web-Server (7₁, 7₂,..., 7_{N}) jeweils einen Simple-Network-Management-Protokoll-Manager zur Kommunikation der Betriebsdaten des jeweiligen Funksenders (3₁, 3₂,..., 3_{N}, 3_{N+1}, 3_{N+2},..., 3_{Z}) aufweisen.

4. System zur Kommunikation von Betriebsdaten zwischen einer Zentrale und mindestens einem unbemannten Funksender nach einem der Ansprüche 1 bis 3,
**dadurch gekennzeichnet,**
**dass** im jeweiligen Web-Server (7₁, 7₂, ..., 7_{N}) eine Vorverarbeitung von einzustellenden Betriebsdaten und ein Abspeichern von mehreren funksenderspezifischen Konfigurationsparametern in verschiedenen funksenderspezifischen Parametersätzen erfolgt.

5. System zur Kommunikation von Betriebsdaten zwischen einer Zentrale und mindestens einem unbemannten Funksender nach einem der Ansprüche 1 bis 4,
**dadurch gekennzeichnet,**
**dass** im jeweiligen Web-Server (7₁, 7₂,..., 7_{N}) eine Nachverarbeitung von erfassten Betriebsdaten und eine Zusammenfassung von mehreren erfassten Bediendaten zu höher aggregierten Bediendaten erfolgt.

6. System zur Kommunikation von Betriebsdaten zwischen einer Zentrale und mindestens einem unbemannten Funksender nach einem der Ansprüche 1 bis 5,
**dadurch gekennzeichnet,**
**dass** der auf dem Web-Client (4) implementierte Web-Browser von der Zentrale (1) auf ein auf einem mobilen Datenerfassungsgerät (1') befindlichen Web-Client (4') ausgelagert ist, der sich mit dem in der Zentrale (1) befindlichen Web-Client (4) in einer Datenkommunikationsverbindung befindet.

7. System zur Kommunikation von Betriebsdaten zwischen einer Zentrale und mindestens einem unbemannten Funksender nach einem der Ansprüche 1 bis 6,
**dadurch gekennzeichnet,**
**dass** die Datenübertragung zwischen dem in der Zentrale (1) befindlichen Web-Client (4) und den in den jeweiligen Funksendern (3₁, 3₂ ,..., 3_{N}) befindlichen Web-Servern (7₁, 7₂,..., 7_{N}) drahtlos nach dem Wireless-Application-Protokoll erfolgt.

## Claims

1. System for communicating operating data between a central office (1) and at least one unmanned radio transmitter (3₁, 3₂, ... , 3_{N}, 3_{N+1}, 3_{N+2,} .... , 3_{z}) via a public or private network (2) with a web client (4) located in the central office (1) having an implemented web browser and at least one web server (7₁, 7₂, ..., 7_{N}) communicating with the web client (4) by the hypertext transfer protocol and located in each case in one or more radio transmitters (3₁, 3₂, ..., 3_{N}) and at least one remote control arrangement (9₁, 9₂, ... , 9_{N}, 9_{N+1}, 9_{N+2}, ..., 9_{Z}) located in each case in each radio transmitter (3₁, 3₂, ... , 3_{N}, 3_{N+1}, 3_{N+2}, ..., 3_{Z}) for monitoring, remote control and/or remote configuration of operating data of the respective radio transmitter (3₁, 3₂, ..., 3_{N}, 3_{N+1}, 3_{N+2}' .., 3_{Z}), **characterised in that**
**characterised in that**
the communication between the web servers (7₁, 7₂, ..., 7_{N}) located in each case in one or more radio transmitters (3₁, 3₂, ... , 3_{N}, 3_{N+1,} 3_{N+2}, ... , 3_{z}) and the remote control arrangement (9₁, 9₂, ... , 9_{N}, 9_{N+1}, 9_{N+2}, ..., 9_{z}) located in each case in each radio transmitter (3₁, 3₂, ..., 3_{N}, 3_{N+1}, 3_{N+2}, ... , 3_{Z}) is effected by the simple network management protocol and
**in that** a function unit (13) is provided in the central office (1) for reception of a simple network management protocol trap which is produced by a simple network management protocol agent located in the remote control arrangement (9₁, 9₂, ... , 9_{N}, 9_{N+1}, 9_{N+2}, ... , 9_{Z}) of a radio transmitter (3₁, 3₂, ... , 3_{N}, 3_{N+1}, 3_{N+2}, ... , 3_{z}) and for transmission of an evaluation of the simple network management protocol trap to the web browser for initiating suitable monitoring, remote configuration and/or remote operating measures.

2. System for communicating operating data between a central office and at least one unmanned radio transmitter according to claim 1,
**characterised in that**
the web client (4) located in the central office (1) exhibits a hypertext transfer protocol interface (5), the web server (7₁, 7₂, ..., 7_{N}) located in the respective radio transmitter (3₁, 3₂, ..., 3_{N}) exhibits a hypertext transfer protocol interface (8₁, 8₂, ... , 8_{N}) and at least one simple network management protocol interface (11₁, 11₂, ..., 11_{N}) and the remote control arrangement (9₁, 9₂, ... , 9_{N}, 9_{N+1}, 9ₙ₊₂, ... , 9_{z}) located in each case in each radio transmitter (3₁, 3₂, ..., 3_{N}, 3_{N+1}, 3_{N+2}, ..., 3_{Z}) exhibits a simple network management protocol interface (101, 102, ... , 10_{N}, 10_{N+1}, 10_{N+2}, ... , 10_{Z}).

3. System for communicating operating data between a central office and at least one unmanned radio transmitter according to claim 1 or 2,
**characterised in that**
the remote control arrangement (9₁, 9₂, ... , 9_{N}, 9_{N+1}, 9_{N+2}, ..., 9_{z}) located in each case in each radio transmitter (3₁, 3₂, ..., 3_{N}, 3_{N+1}, 3_{N+2}, ... , 3_{Z}) exhibits a simple network management protocol agent and the web servers (7₁, 7₂, ... , 7_{N}) located in each case on the respective radio transmitters (3₁, 3₂, ..., 3_{N}) each exhibit a simple network management protocol manager for communicating the operating data of the respective radio transmitter (3₁, 3₂, ... , 3_{N}, 3_{N+1}, 3_{N+2}, ..., 3_{Z}).

4. System for communicating operating data between a central office and at least one unmanned radio transmitter according to one of claims 1 to 3,
**characterised in that**
pre-processing of operating data to be set and storage of a plurality of radio transmitter-specific configuration parameters in different radio transmitter-specific parameter sets is effected in the respective web server (7₁, 7₂, ... , 7_{N}).

5. System for communicating operating data between a central office and at least one unmanned radio transmitter according to one of claims 1 to 4,
**characterised in that**
post-processing of detected operating data and compilation of a plurality of detected operating data into higher aggregated operating data is effected in the respective web server (7₁, 7₂, ... , 7_{N}) .

6. System for communicating operating data between a central office and at least one unmanned radio transmitter according to one of claims 1 to 5,
**characterised in that**
the web browser implemented on the web client (4) is transferred from the central office (1) to a web client (4') located on a mobile data detection device (1'), in a data communicating connection with the web client (4) located in the central office (1).

7. System for communicating operating data between a central office and at least one unmanned radio transmitter according to one of claims 1 to 6,
**characterised in that**
the data transmission between the web client (4) located in the central office (1) and the web servers (7₁, 7₂ , ..., 7_{N}) located in the respective radio transmitters (3₁, 3₂, ... , 3_{N}) is effected wirelessly by the wireless application protocol.

## Revendications

1. Système de communication de données d'exploitation entre une centrale (1) et au moins un émetteur non occupé (3₁, 3₂ ,..., 3_{N}, 3_{N+1}, 3_{N+2}, ..., 3_{Z}) par l'intermédiaire d'un réseau public ou privé (2) comportant un client Web (4) se trouvant dans la centrale (1) avec un navigateur web mis en oeuvre et avec au moins un serveur web (7₁, 7₂ ,..., 7_{N}) se trouvant respectivement dans un ou plusieurs émetteurs radio (3₁, 3₂,..., 3_{N}) et communiquant avec le client web (4) selon le protocole de transfert hypertexte et au moins une installation de télécommande (9₁, 9₂, ..., 9_{N}, 9_{N+1}, 9ₙ₊₂ ,..., 9_{Z}) se trouvant respectivement dans chaque émetteur radio (3₁, 3₂,..., 3_{N}, 3_{N+1}, 3_{N+2} ,...., 3_{z}) pour la surveillance, la télécommande et/ou la configuration à distance des données d'exploitation de l'émetteur radio respectif (3₁, 3₂,..., 3_{N}, 3_{N+1}, 3_{N+2},..., 3_{Z})
**caractérisé en ce que**
la communication entre les serveurs web (7₁, 7₂, ..., 7_{N}) se trouvant respectivement dans un ou plusieurs émetteurs radio (3₁, 3₂,..., 3_{N}, 3ₙ₊₁, 3_{N+2},..., 3_{Z}) et l'installation de télécommande (9₁, 9₂, ..., 9_{N}, 9_{N+1}. 9_{N+2}, ..., 9_{Z}) se trouvant respectivement dans chaque émetteur radio (3₁, 3₂,..., 3_{N}, 3_{N+1}, 3_{N+2}, ..., 3_{Z}) est effectuée selon le protocole simple de gestion de réseau et
dans la centrale (1) est prévue une unité fonctionnelle (13) pour recevoir une alerte de protocole simple de gestion de réseau, qui est générée par un agent de protocole simple de gestion de réseau se trouvant dans l'installation de télécommande (9₁, 9₂, ..., 9_{N}, 9_{N+1}, 9_{N+2}, ..., 9_{Z}) d'un émetteur radio (3₁, 3₂, ..., 3_{N}, 3_{N+1}, 3_{N+2} ,..., 3_{Z}), et pour retransmettre une estimation de l'alerte de protocole simple de gestion de réseau au navigateur web pour déclencher des mesures de surveillance, de configuration à distance et/ou de télécommande appropriées.

2. Système de communication de données d'exploitation entre une centrale et au moins un émetteur radio non occupé selon la revendication 1, **caractérisé en ce que**
le client web (4) se trouvant dans la centrale (1) comporte une interface de protocole de transfert hypertexte (5), le serveur web (7₁, 7₂,..., 7_{N}) se trouvant dans l'émetteur radio respectif (3₁, 3₂, ..., 3_{N}) comporte une interface de protocole de transfert hypertexte (8₁, 8₂, ..., 8_{N}) et au moins une interface de protocole simple de gestion de réseau (11₁, 11₂,..., 11_{N}) et l'installation de télécommande (9₁, 9₂,..., 9_{N}, 9ₙ₊₁, 9_{N+2}, ..., 9_{Z}) se trouvant respectivement dans chaque émetteur radio (3₁, 3₂ ,..., 3_{N}, 3_{N+1}, 3_{N+2},..., 3_{Z}) comporte une interface de protocole simple de gestion de réseau (10₁, 10₂, ..., 10_{N}, 10_{N+1}, 10_{N+2}, ..., 10_{Z}).

3. Système de communication de données d'exploitation entre une centrale et au moins un émetteur radio non occupé selon la revendication 1 ou 2, **caractérisé en ce que**
l'installation de télécommande (9₁, 9₂,..., 9_{N}, 9_{N+1}. 9_{N+2}, ..., 9_{z}) se trouvant respectivement dans chaque émetteur radio (3₁, 3₂,..., 3_{N}, 3_{N+1}, 3_{N+2} ,..., 3_{Z}) comporte un agent de protocole simple de gestion de réseau et les serveurs web (7₁, 7₂ ,...., 7_{N}) se trouvant respectivement sur les émetteurs radio respectifs (3₁, 3₂,..., 3_{N}) comportent respectivement un gestionnaire de protocole simple de gestion de réseau pour communiquer les données d'exploitation de l'émetteur radio respectif (3₁, 3₂ ,..., 3_{N}, 3_{N+1}, 3_{N+2}...., 3_{Z}).

4. Système de communication de données d'exploitation entre une centrale et au moins un émetteur radio non occupé selon l'une des revendications 1 à 3, **caractérisé en ce que**
dans le serveur web respectif (7₁, 7₂,..., 7_{N}) sont effectués un prétraitement des données d'exploitation à régler et une mémorisation de plusieurs paramètres de configuration spécifiques à l'émetteur radio dans différents groupes de paramètres spécifiques à l'émetteur radio.

5. Système de communication de données d'exploitation entre une centrale et au moins un émetteur radio non occupé selon l'une des revendications 1 à 4, **caractérisé en ce que**
un post-traitement des données d'exploitation collectées et un récapitulatif de plusieurs données d'exploitation collectées pour des données d'exploitation très agrégées sont effectués dans le serveur web respectif (7₁, 7₂,...., 7_{N}).

6. Système de communication de données d'exploitation entre une centrale et au moins un émetteur radio non occupé selon l'une des revendications 1 à 5, **caractérisé en ce que**
le navigateur web mis en oeuvre sur le client web (4) est délocalisé de la centrale (1) à un client web (4') se trouvant sur un appareil de collecte de données mobile (1') , qui se trouve en relation de communication de données avec le client web (4) se trouvant dans la centrale (1).

7. Système de communication de données d'exploitation entre une centrale et au moins un émetteur radio non occupé selon l'une des revendications 1 à 6, **caractérisé en ce que**
la transmission de données entre le client web (4) se trouvant dans la centrale (1) et les serveurs web (7₁, 7₂ ,...., 7_{N}) se trouvant dans les émetteurs radio respectifs (3₁, 3₂,..., 3_{N}) est effectuée de manière sans fil selon le protocole d'application sans fil.
